# FASCICULE DE BREVET EUROPEEN

(11) **EP 2 681 084 B1**
(45) Date de publication et mention de la délivrance du brevet: **12.02.2020**
(21) Numéro de dépôt: 12712306.5
(22) Date de dépôt: 01.03.2012
(51) Int. Cl.: B60R 25/00

(54) **DISPOSITIF, SYSTÈME ET PROCÉDÉ POUR LE PARTAGE DE VÉHICULES**
VORRICHTUNG, SYSTEM UND VERFAHREN ZUM CARSHARING
DEVICE, SYSTEM AND METHOD FOR SHARING VEHICLES

(30) Priorité: 02.03.2011 FR 1151685
(43) Date de publication de la demande: 08.01.2014
(73) Titulaire: PVP Technologies Canada Inc., Québec H4R 2M6 (CA)
(72) Inventeur: SAVOURE, Stéphane, Kirkland, Québec H9J2H3 (CA)
(74) Mandataire: Mazabraud, Xavier
(86) Numéro de dépôt international: PCT/FR2012/050429
(87) Numéro de publication internationale: WO 2012/117207

(56) Documents cités:
- EP-A1- 1 583 041
- WO-A2-2007/106875
- US-A1- 2010 073 130

## Description

La présente invention se rapporte à un dispositif de sécurité prévu pour sécuriser l'usage d'un véhicule mis en partage entre plusieurs utilisateurs ou d'un véhicule de location, notamment pour s'assurer que le véhicule est bien utilisé par l'utilisateur prévu.

Dans ce contexte de partage ou de location de véhicule entre particuliers, il est pratique de laisser une clé de contact à l'intérieur du véhicule, généralement dans la boîte à gants. Ainsi, il n'y a plus d'échange direct de clés avec le propriétaire, ce qui est contraignant. Cependant, sans un dispositif ou un procédé de sécurité approprié, le véhicule devient une cible facile pour des voleurs.

On connaît des dispositifs de type coupe-circuit électronique, employés dans ces cas. Cependant, ils présentent tous au moins deux inconvénients majeurs :
- L'installation d'un boîtier agissant comme coupe-circuit nécessite d'intervenir sur le câblage électrique du véhicule, ce qui complique l'installation du dispositif et peut entraîner l'annulation de la garantie constructeur.
- La plupart des véhicules modernes sont équipés d'un système antivol perfectionné fonctionnant avec un dispositif de détection de la proximité de la clé du véhicule. Ainsi, le véhicule ne peut démarrer que si une clé valide est effectivement dans ou à proximité du véhicule. Dès lors qu'une clé, prévue pour le partage du véhicule, se trouve dans le véhicule, un dispositif de type coupe-circuit offre un niveau de protection inférieur au niveau de protection d'origine du véhicule (protection constructeur). Ceci peut entraîner un problème au niveau de la police d'assurance.

L'invention a pour but de proposer un dispositif de protection renforcée permettant de mettre un véhicule à la disposition de plusieurs utilisateurs, une clé de contact étant laissée à disposition dans le véhicule, tout en s'assurant, lorsqu'une personne démarre le véhicule, que cette personne est bien un utilisateur autorisé.

Les véhicules récents sont équipés de clés intelligentes, chacune contenant une puce électronique active ou passive qui rend cette clé unique. Dans chaque véhicule, il y a un ordinateur embarqué, souvent appelé ECU (Engine Control Unit), dans lequel est mémorisé un identifiant pour chaque clé autorisée à démarrer ce véhicule. Ainsi, seule une clé dont l'identifiant a été mémorisé dans le véhicule est apte à désactiver le dispositif anti-démarrage, donc à autoriser la conduite du véhicule.

Il existe notamment des outils permettant de programmer une nouvelle clé, par exemple lorsqu'une clé a été perdue. En règle générale, seul un concessionnaire agréé peut programmer une nouvelle clé en connectant un outil dédié sur un bus logiciel CAN accessible sur un port OBD (On Bord Diagnostics, par exemple de type OBD-II) du véhicule. Le document WO 2007/106875 décrit un dispositif pour autoriser l'usage d'un véhicule.

Pour atteindre ce but et selon un premier de ses objets, l'invention propose un dispositif pour autoriser l'usage d'un véhicule selon la revendication 1, un système de partage d'au moins un véhicule selon la revendication 5, un procédé d'autorisation d'usage pour un véhicule partagé selon la revendication 9 et un procédé d'autorisation d'usage pour un véhicule partagé selon la revendication 12.

Les moyens pour autoriser l'usage de la clé peuvent comprendre des moyens d'activation / désactivation de la clé, les paramètres d'identification de la clé étant préalablement mémorisés dans le dispositif d'accréditation. Alternativement, les moyens pour autoriser l'usage de la clé peuvent comprendre des moyens pour enregistrer les paramètres d'identification de la clé dans le dispositif d'accréditation lorsque l'usage de la clé de partage est autorisé et pour effacer les paramètres d'identification de la clé dans le dispositif d'accréditation lorsque l'usage de la clé de partage est interdit.

Les moyens pour détecter la présence d'un utilisateur peuvent comprendre des moyens d'antenne RFID.

Le dispositif peut en outre comprendre des moyens pour déterminer la position du véhicule et des moyens pour transmettre cette position à un serveur distant. Le dispositif peut aussi comprendre des moyens pour recevoir des informations de disponibilité et/ou de réservation, depuis un serveur distant. Ce dispositif peut encore comprendre des moyens pour envoyer un ordre d'ouverture de porte au véhicule.

Selon un second objet de l'invention, un système de partage d'au moins un véhicule, selon l'invention, est caractérisé en ce que chaque véhicule comprend un dispositif de partage selon l'invention et au moins un serveur distant pour échanger des informations de partage, notamment de position et/ou de disponibilité et/ou de réservation, avec un poste distant et/ou avec le dispositif de partage. Un tel système comprend avantageusement un dispositif de reconnaissance propre à chaque utilisateur.

Selon un troisième objet de l'invention, un procédé d'autorisation d'usage pour un véhicule partagé, selon l'invention, est caractérisé en qu'il comprend la fourniture d'un dispositif selon l'invention et sa connexion avec les moyens propres au véhicule pour accréditer des clés de contact, de préférence via un bus logiciel CAN, de préférence accessible par un port OBD, et des étapes pour autoriser l'usage de la clé de partage par un utilisateur autorisé et interdire l'usage de ladite clé par un autre utilisateur.

Selon l'invention les étapes pour autoriser l'usage de la clef peuvent comprendre une étape pour enregistrer préalablement les paramètres d'identification de la clé dans les moyens d'accréditation et une étape pour ensuite activer ladite clé, et, les étapes pour interdire l'usage de ladite clé peuvent comprendre une étape pour désactiver la clé sans effacer les paramètres d'identification de la clé préalablement enregistrés dans les moyens d'accréditation. Alternativement, les étapes pour autoriser l'usage de la clef peuvent comprendre une étape pour enregistrer les paramètres d'identification de la clé dans les moyens d'accréditation, et, les étapes pour interdire l'usage de ladite clé peuvent comprendre une étape pour effacer les paramètres d'identification de la clé préalablement enregistrés dans les moyens d'accréditation.

Par ailleurs, un procédé d'autorisation d'usage pour un véhicule partagé selon l'invention peut se caractériser en ce qu'il comprend l'utilisation d'un système de partage prévu pour prendre un état pour un usage "propriétaire" et un état pour un usage partagé, dans lequel l'usage propriétaire est libre de toute surveillance par ledit système de partage. Ainsi, le propriétaire peut utiliser son véhicule comme un véhicule ordinaire, non équipé pour le partage, sans que les heures, durées et localisations d'utilisation ne soient enregistrées ou transmises au serveur central. Par exemple, la position du véhicule peut n'être enregistrée que lorsque le propriétaire définit une période de disponibilité.

Dans ce document, on appelle clé tout dispositif prévu pour mettre le contact d'un véhicule, que ce dispositif ait une forme classique de clé prévue pour être introduite dans un orifice de type serrure, ou, comme c'est de plus en plus souvent le cas, celle d'une carte que l'on introduit dans une fente. Les clés de forme classique comportent généralement une commande d'ouverture de portes à distance, par appuis sur un bouton ; les cartes comportent généralement une fonction d'ouverture de portes sans contact, de type capacitif.

Plusieurs modes d'exécution de l'invention seront décrits ci-après, à titre d'exemples non limitatifs, en référence aux dessins annexés dans lesquels :
- la figure 1 illustre un système mettant en œuvre l'invention ; et,
- La figure 2 est un logigramme illustrant un fonctionnement possible pour le système de la figure 1.

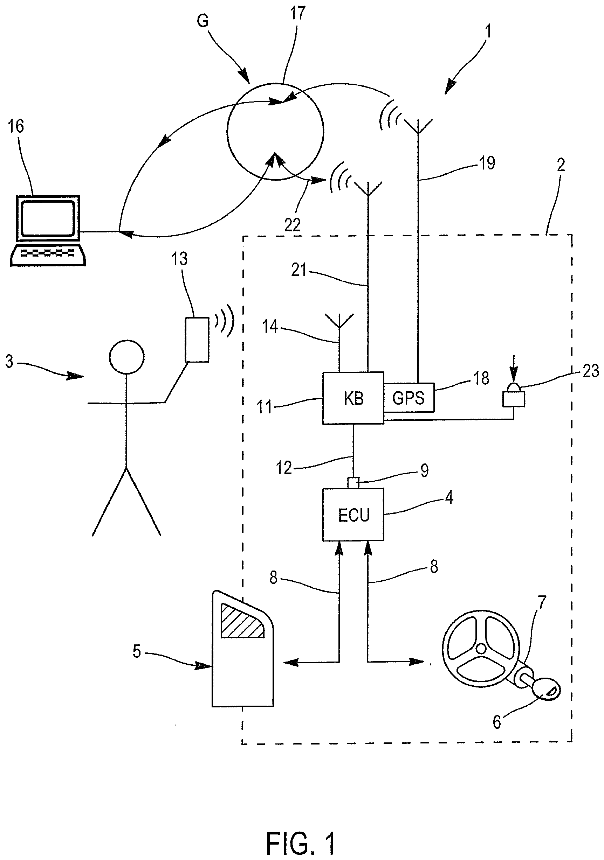

La figure 1 est une représentation schématique d'un système 1 permettant de mettre en œuvre un service de partage d'une automobile 2 entre plusieurs utilisateurs 3 du service de partage. L'automobile 2 est figurée à la figure 1 par un rectangle en traits interrompus. Le service de partage est géré par un gestionnaire G.

L'automobile 2 comprend notamment un boîtier de contrôle 4 de type ordinateur embarqué (ECU, c'est à dire Engine Control Unit, en anglais, Unité de contrôle moteur, en français). Le boîtier de commande 4 est monté d'origine sur le véhicule 2, il permet de contrôler divers équipements du véhicule, notamment l'ouverture des portes 5. Des bus de données 8 spécifiques permettent de relier le boîtier de contrôle 4 avec chacun de ces équipements. Il autorise aussi le démarrage du véhicule 2 lorsqu'une clé de contact appropriée est introduite dans le dispositif de démarrage 7, ou lorsque le conducteur appuie sur un bouton de démarrage. C'est dans le boîtier de contrôle que sont stockés les identifiants des clés (généralement deux) autorisées à ouvrir et démarrer le véhicule.

Le boîtier de contrôle comprend en outre un port informatique 9 - par exemple de type connu sous l'abréviation OBD-II (On Board Diagnostic, version II) - qui permet notamment à un technicien de se connecter au boîtier de contrôle 4 afin de faire un diagnostique du fonctionnement du véhicule 2. C'est aussi par ce moyen qu'un technicien peut aussi enregistrer une nouvelle clé, notamment pour remplacer une clé perdue ; la clé perdue peut aussi être déprogrammée, afin qu'elle ne puisse plus être utilisée, notamment par une personne mal intentionnée qui aurait dérobé cette clé dans ce but.

L'automobile comprend en outre un boîtier de partage 11 (KB), dédié à la fonction partage de l'invention ; c'est-à-dire que c'est essentiellement grâce à ce boîtier que plusieurs utilisateurs peuvent partager le véhicule en toute sécurité. Dans l'exemple décrit, ce boîtier est spécifique et n'est pas monté d'origine sur le véhicule. Le boîtier de partage 11 est relié au port 9 par un bus 12.

Les personnes qui veulent utiliser un tel véhicule, mis en partage par son propriétaire, qu'il soit une personne physique ou morale, sont inscrites auprès du gestionnaire G. Le gestionnaire G met à disposition de chacun des utilisateurs du système 1 des moyens de reconnaissance 13, 14 lui permettant d'être reconnu comme un utilisateur par le système 1. Dans l'exemple illustré, les moyens de reconnaissance comprennent notamment une carte RFID 13, fournie à chaque utilisateur 3 et une antenne RFID 14 équipant le boîtier de partage 11.

Dans l'exemple illustré, pour qu'un utilisateur 3 reconnu soit autorisé à utiliser le véhicule 2, il faut que le véhicule soit disponible et que l'utilisateur l'ait réservé.

Un terminal distant 16 peut être utilisé pour la mise à disposition et/ou la réservation du véhicule 2. Ce poste distant peut être un poste fixe, tel qu'illustré à la figure 1, ou un terminal mobile, par exemple un téléphone mobile.

Le gestionnaire G comprend un serveur informatique 17 qui gère les mises à dispositions, les réservations et la position du véhicule 2.

La position du véhicule est calculée par un dispositif de positionnement global 18, par exemple du type GPS (Global Positioning System). La position est ensuite transmise au serveur par des moyens de téléphonie sans fil 19, par exemple de type GSM. Ainsi, le serveur peut être informé de la position exacte de chaque véhicule dont il assure la gestion ; cette information peut être utilisée pour informer un utilisateur qui cherche un véhicule à emprunter dans une zone donnée, et, un réservataire de la position exacte du véhicule qu'il doit emprunter ; cette information est aussi utilisée pour informer le propriétaire de la position de son véhicule lorsqu'il souhaite en reprendre possession.

De préférence, les informations relatives à la position du véhicule ne sont pas transmises au serveur, ou recueillies par le serveur 17, lorsque le véhicule est indisponible ou utilisé par un réservataire, sauf pour informer le propriétaire de la position du véhicule s'il n'en a pas déjà repris possession. Ainsi, la confidentialité des déplacements est préservée, que ce soit ceux du réservataire ou ceux du propriétaire du véhicule, particulièrement si le propriétaire est une personne physique.

Le boîtier de partage 11 comprend des moyens de téléphonie sans fil 21 pour communiquer avec le serveur 17. Ainsi, au moyen d'une transmission bidirectionnelle 22, le boîtier de partage peut notamment être informé que le véhicule qui en est équipé est disponible, ou, que l'utilisateur 3 qui se présente en est bien le réservataire.

Le système 1 comprend en outre un bouton de libération 23 monté dans le véhicule en liaison avec le boîtier de partage 11 ; lorsqu'un utilisateur veut mettre un terme à sa réservation, et libérer le véhicule, il lui suffit d'appuyer sur le bouton 23.

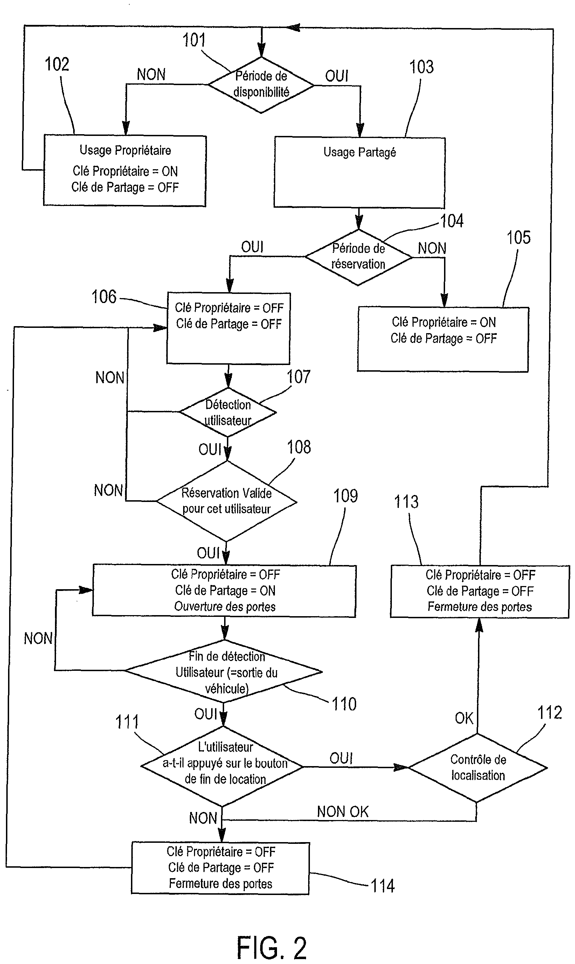

Dans l'exemple illustré à la figure 2, le propriétaire du véhicule est supposé être une personne physique, utilisant de façon privative son véhicule, en dehors de plages de disponibilité. Ces plages de disponibilité sont renseignées par le propriétaire auprès du gestionnaire du service de partage. Les utilisateurs 3 du service de partage peuvent donc utiliser le véhicule durant ces plages de disponibilité.

La figure 2 illustre sous la forme d'un organigramme, le fonctionnement d'un boîtier de partage 11 apte à être utilisé dans un système 1 tel que précédemment décrit en référence à la figure 1.

Dans sa disposition initiale 101, le boîtier de partage 11 est dans une position d'attente dans laquelle il vérifie si une période de disponibilité est en cours. Tant que le boîtier n'est pas informé de la mise en disponibilité du véhicule, un usage propriétaire 102 est maintenu. Dans les conditions d'usage "propriétaire", l'usage de la clé de partage n'est pas autorisé et celui de la clé propriétaire est maintenu autorisé. Aucune surveillance du véhicule n'est faite, en particulier la position du véhicule n'est pas relevée par le système. Seule la clé du propriétaire permet de démarrer le véhicule. L'ouverture des portes se déclenche uniquement avec le dispositif d'origine du constructeur. Dans cet état 102, le boîtier de partage n'est pas utilisé pour détecter la présence du propriétaire, ni celle d'un autre utilisateur.

Lorsque le boîtier KB est informé d'une période de disponibilité, la fonction "usage partagé" 103 est mise en œuvre. Dans cette position, le boîtier vérifie 104 si une période de réservation a débuté et le boîtier de partage surveille l'utilisation du véhicule. Si aucune réservation n'est en cours, un usage propriétaire 105 est maintenu, seul l'usage de la clé propriétaire est autorisé. Le propriétaire conserve une priorité sur l'usage du véhicule ; il peut l'utiliser dans une situation d'urgence. Si le propriétaire utilise effectivement son véhicule, le boîtier de partage 11 détecte cet usage par le propriétaire et en informe le serveur distant 17. Des opérations peuvent alors être déclenchées par le serveur 17, notamment relatives au maintien en disponibilité du véhicule ou relatives aux réservations à venir.

Si, durant la position "usage partagé" 103, une période de réservation a débuté, l'usage des deux clés, propriétaire et de partage n'est plus autorisé, dans l'attente de l'utilisateur réservataire. Ainsi, le boîtier 11 se met dans une position d'attente 106 pendant laquelle il vérifie 107 la présence ou non d'un utilisateur, et, si un utilisateur se présente, il vérifie 108 si cet utilisateur a une réservation en cours de validité.

Lorsqu'un utilisateur ayant une réservation valide est détecté, le système se met dans une configuration 109 dans laquelle l'usage de la clé de partage est autorisé, et l'usage de celle du propriétaire interdit ; l'ouverture des portes du véhicule est déclenchée et l'utilisateur peut utiliser le véhicule avec la clé de partage.

Dans la configuration d'usage 109, le boîtier de partage surveille 110 la présence de l'utilisateur dans le véhicule. Si l'utilisateur réservataire quitte le véhicule, le boîtier vérifie si le bouton de libération 23 a été appuyé. Si ce n'est pas le cas, une opération de sécurisation 114 est déclenchée : l'usage de la clé de partage est interdit, l'interdiction de celle du propriétaire est maintenue et les portes sont fermées. Le boîtier 11 revient dans la position d'attente 106, dans l'attende du retour du même utilisateur.

Si, au contraire, l'utilisateur quitte le véhicule en appuyant sur le bouton de libération, le système 1 effectue des opérations de contrôle 112, notamment celui de la localisation du véhicule. Si le résultat des opérations de contrôle 112 est négatif, notamment si le véhicule n'est pas garé à un endroit prévu, les opérations de sécurité 114 sont déclenchées : l'usage de la clé de partage est interdit, l'interdiction de celle du propriétaire est maintenue et les portes sont fermées. Le boîtier 11 revient dans la position d'attente 106, dans l'attende du retour du même utilisateur.

Si le résultat de l'opération de contrôle 112 est positif, des opérations de sécurité 113 sont déclenchées : l'usage de la clé de partage est interdit, l'interdiction de celle du propriétaire est maintenue et les portes sont fermées. Le boîtier 11 revient dans la position d'attente initiale 101, dans laquelle le boîtier vérifie si une période de disponibilité est en cours.

Deux procédés pour autoriser l'usage de la clé de partage, ou pour en interdire l'usage, peuvent être utilisés, l'un à l'exclusion de l'autre, selon le mode de fonctionnement choisi pour le boîtier de partage 11 (KB).

Selon un premier procédé, dit d'activation, l'identifiant de la clé est enregistré dans le boîtier de contrôle 4, et y est maintenu. La clé 6 restant identifiée par le véhicule, le boîtier de partage envoie une autorisation d'utilisation, ou d'interdiction d'usage pour la clé de partage 6.

Selon le deuxième procédé, dit de programmation, l'identifiant de la clé est seulement enregistré dans le boîtier de contrôle 4 lors de l'activation de la clé, comme le serait une nouvelle clé. Lors de la désactivation, l'identifiant est effacé de la mémoire du boîtier de contrôle, comme le serait une clé perdue ou volée. Dans ce deuxième procédé, l'identifiant de la clé de partage est donc mémorisé dans le boîtier de partage, qui le transmet en temps utile au boîtier de contrôle.

Bien sûr, l'invention n'est pas limitée aux modes de réalisation préférés qui viennent d'être décrits.

Ainsi, il peut être prévu qu'un utilisateur du service de partage ne réserve pas le véhicule préalablement. Il peut être prévu, lorsque l'utilisateur est reconnu, une procédure qui lui permette d'utiliser le véhicule, dés lors que celui-ci est disponible.

Les moyens de téléphonie sans fil utilisés par le boîtier de partage peuvent être les mêmes que les moyens de téléphonie sans fil utilisés par le dispositif de positionnement. C'est le cas lorsque le dispositif de positionnement est une partie intégrante du boîtier de partage ; les moyens d'antenne ou de modem pouvant être partagés. Au contraire, si le système de positionnement du véhicule 2 fait partie de ses équipements d'origine, le boîtier de partage et le dispositif de positionnement peuvent utiliser des moyens de téléphonie indépendants, qui leur sont propres.

Lorsque le propriétaire définit une période de disponibilité avant le début de cette période de disponibilité, il peut être prévu la possibilité que le propriétaire informe le serveur de l'adresse à laquelle le véhicule sera disponible. Ainsi, un premier utilisateur pourra réserver le véhicule à l'avance, sans qu'il soit nécessaire d'attendre le début de la période de disponibilité pour connaître les coordonnées du véhicule.

De la description qui vient d'être faite, il apparaît clairement que l'invention proposée consiste à utiliser l'interface logicielle conçue initialement pour programmer les clés du véhicule, dans le contexte du partage d'un ou plusieurs véhicules, afin de le ou les protéger contre le vol.

Dans l'application illustrée, le boîtier de partage est relié par un câble à un port existant de l'ECU du véhicule. Toutes les informations nécessaires à l'ouverture des portes et aux commandes antivol passent par ce câble. L'installation ne nécessite donc aucun câblage particulier, aucune soudure, ni aucune modification des dispositions et des fonctions d'origine du véhicule. L'installation d'un boîtier de partage selon l'invention ne nécessite donc aucune compétence particulière et peut être effectuée directement par le propriétaire du véhicule. Il peut donc être qualifié, selon un anglicisme courant, de "plug and play".

De ce fait, aucune modification n'étant apportée au câblage ni aux fonctions d'origine du véhicule, donc en garantissant au moins le même niveau de protection contre le vol, l'utilisation d'un boîtier selon l'invention ne pose de problème, ni vis-à-vis de la garantie constructeur, ni vis-à-vis d'une police d'assurance.

Le boîtier de partage fonctionne comme un interrupteur sophistiqué, qui, notamment, activerait et désactiverait la clef de partage, tout en restant totalement transparent pour l'utilisateur.

Un boîtier de partage selon l'invention et un système de partage selon l'invention sont donc particulièrement avantageux.

## Revendications

1. Dispositif (11) pour autoriser l'usage d'un véhicule (2), prévu pour être relié, d'une part à des moyens (14) pour reconnaître la présence d'un utilisateur autorisé (3) et, d'autre part, à un dispositif d'accréditation (4) propre audit véhicule et prévu pour accréditer des clefs de contact, ledit dispositif étant relié au dispositif d'accréditation par des moyens de connexion, de préférence via un bus logiciel CAN (12), de préférence accessible par un port OBD (9),
ledit dispositif comprenant des moyens de mémoire pour conserver des paramètres d'identification d'une clef de partage (6) unique, des moyens pour autoriser l'usage de la clef de partage par ledit utilisateur, et des moyens pour interdire l'usage de la clef de partage sans effacer lesdits paramètres d'identification,
les moyens pour autoriser l'usage de la clé comprennent des moyens d'activation / désactivation de la clé, les paramètres d'identification de la clé étant préalablement mémorisés dans ledit dispositif d'accréditation (4).

2. Dispositif selon la revendication 1, **caractérisé en ce que** le dispositif comprend des moyens (18) pour déterminer la position du véhicule et des moyens (16) pour transmettre ladite position à un serveur (17) distant.

3. Dispositif selon l'une des revendications 1 ou 2, **caractérisé en ce qu'**il comprend des moyens (21) pour recevoir des informations de disponibilité et/ou de réservation, depuis un serveur distant (17).

4. Dispositif selon l'une des revendications 1 à 3, **caractérisé en ce qu'**il comprend des moyens pour envoyer un ordre d'ouverture de porte au véhicule.

5. Système de partage d'au moins un véhicule (2), **caractérisé en ce que** chaque véhicule comprend un dispositif de partage (11) selon l'une des revendications 1 à 4, des moyens (14) pour reconnaître la présence d'un utilisateur autorisé (3) et des moyens de connexion avec le dispositif d'accréditation (4).

6. Système de partage selon la revendication 5, **caractérisé en ce que** les moyens pour détecter la présence d'un utilisateur comprennent des moyens d'antenne RFID (14).

7. Système de partage selon l'une des revendications 5 et 6, **caractérisé en ce qu'**il comprend au moins un serveur distant (17) pour échanger des informations de partage, notamment de position et/ou de disponibilité et/ou de réservation, avec un poste distant (16) et/ou avec le dispositif de partage (11).

8. Système de partage selon l'une des revendications 5 à 7, **caractérisé en ce qu'**il comprend en outre au moins un dispositif de reconnaissance (13) propre à chaque utilisateur.

9. Procédé d'autorisation d'usage pour un véhicule partagé, caractérisé en qu'il comprend la fourniture d'un dispositif (11) selon l'une des revendications 1 à 5 et la connexion dudit dispositif (11) avec les moyens propres au véhicule pour accréditer des clés de contact, de préférence via un bus logiciel CAN (12), de préférence accessible par un port OBD (9), et des étapes pour autoriser l'usage de la clé de partage (6) par un utilisateur (3) autorisé et interdire l'usage de ladite clé par un autre utilisateur.

10. Procédé selon la revendication 9, **caractérisé en ce que** les étapes pour autoriser l'usage de la clef comprennent une étape pour enregistrer préalablement les paramètres d'identification de la clé dans les moyens d'accréditation (4) et une étape pour ensuite activer ladite clé, et, **en ce que** les étapes pour interdire l'usage de ladite clé comprennent une étape pour désactiver la clé sans effacer les paramètres d'identification de la clé préalablement enregistrés dans les moyens d'accréditation.

11. Procédé selon la revendication 9, **caractérisé en ce que** les étapes pour autoriser l'usage de la clef comprennent une étape pour enregistrer les paramètres d'identification de la clé dans les moyens d'accréditation (4), et, **en ce que** les étapes pour interdire l'usage de ladite clé comprennent une étape pour effacer les paramètres d'identification de la clé préalablement enregistrés dans les moyens d'accréditation.

12. Procédé d'autorisation d'usage pour un véhicule (2) partagé, **caractérisé en ce qu'**il comprend l'utilisation d'un système de partage (1) selon l'une des revendications 5 à 8, ledit système étant prévu pour prendre un état (102) pour un usage propriétaire et un état (103) pour un usage partagé, et dans lequel l'usage propriétaire est libre de toute surveillance par ledit système de partage (1).

## Patentansprüche

1. Vorrichtung (11) zur Autorisierung der Nutzung eines Fahrzeugs (2), die vorgesehen ist für eine Verbindung mit einer Einrichtung (14) zum Erkennen der Anwesenheit eines autorisierten Nutzers (3) einerseits und mit einer fahrzeugspezifischen, für die Akkreditierung von Zündschlüsseln vorgesehenen Akkreditierungsvorrichtung (4) andererseits, wobei die Vorrichtung durch eine Verbindungseinrichtung mit der Akkreditierungsvorrichtung verbunden ist, vorzugsweise über einen CAN-Softwarebus (12), der vorzugsweise über einen OBD-Port (9) zugänglich ist,
wobei die Vorrichtung eine Speichereinrichtung zum Speichern von Identifikationsparametern eines einmaligen gemeinsamen Schlüssels (6), eine Einrichtung zum Autorisieren der Nutzung des gemeinsamen Schlüssels durch den Nutzer und eine Einrichtung zum Verhindern der Nutzung des gemeinsamen Schlüssels ohne Löschen der Identifizierungsparameter umfasst,
wobei die Einrichtung zum Autorisieren der Nutzung des Schlüssels Mittel zum Aktivieren/Deaktivieren des Schlüssels umfasst, wobei die Identifizierungsparameter des Schlüssels zuvor in der Akkreditierungsvorrichtung (4) gespeichert werden.

2. Vorrichtung nach Anspruch 1, **dadurch gekennzeichnet, dass** die Vorrichtung eine Einrichtung (18) zum Bestimmen der Position des Fahrzeugs und eine Einrichtung (16) zum Übertragen dieser Position zu einem entfernten Server (17) umfasst.

3. Vorrichtung nach einem der Ansprüche 1 oder 2, **dadurch gekennzeichnet, dass** diese eine Einrichtung (21) zum Empfangen von Verfügbarkeits- und/oder Reservierungsinformationen von einem entfernten Server (17) umfasst.

4. Vorrichtung nach einem der Ansprüche 1 bis 3, **dadurch gekennzeichnet, dass** diese eine Einrichtung zum Senden eines Türöffnungsbefehls an das Fahrzeug umfasst.

5. Sharing-System für mindestens ein Fahrzeug (2), **dadurch gekennzeichnet, dass** jedes Fahrzeug eine Sharing-Vorrichtung (11) gemäß einem der Ansprüche 1 bis 4 enthält, eine Einrichtung (14) zum Erkennen der Anwesenheit eines autorisierten Nutzers (3) und eine Einrichtung für eine Verbindung mit der Akkreditierungsvorrichtung (4).

6. Sharing-System nach Anspruch 5, **dadurch gekennzeichnet, dass** die Einrichtung zum Detektieren der Anwesenheit eines Nutzers eine RFID-Antenne (14) umfasst.

7. Sharing-System nach einem der Ansprüche 5 und 6, **dadurch gekennzeichnet, dass** diese mindestens einen entfernten Server (17) zum Austausch von Sharing-Informationen, insbesondere von Positions- und/oder Verfügbarkeits- und/oder Reservierungsinformationen mit einer entfernten Station (16) und/oder mit der Sharing-Vorrichtung (11) umfasst.

8. Sharing-System nach einem der Ansprüche 5 bis 7, **dadurch gekennzeichnet, dass** dieses ferner mindestens eine eigene Erkennungsvorrichtung (13) für jeden Nutzer umfasst.

9. Verfahren zur Autorisierung der Nutzung eines gemeinsam genutzten Fahrzeugs, **dadurch gekennzeichnet, dass** dieses das Bereitstellen einer Vorrichtung (11) gemäß einem der Ansprüche 1 bis 5 und das Verbinden der Vorrichtung (11) mit der fahrzeugspezifischen Einrichtung zum Akkreditieren von Zündschlüsseln, vorzugsweise über einen CAN-Softwarebus (12), der vorzugsweise über einen OBD-Port (9) zugänglich ist, und Schritte zum Autorisieren der Nutzung des gemeinsamen Schlüssels (6) durch einen autorisierten Nutzer (3) und zum Verhindern der Nutzung des Schlüssels durch einen anderen Nutzer umfasst.

10. Verfahren nach Anspruch 9, **dadurch gekennzeichnet, dass** die Schritte zum Autorisieren der Nutzung des Schlüssels einen Schritt zum vorherigen Registrieren der Identifikationsparameter des Schlüssels in der Akkreditierungsvorrichtung (4) und einen Schritt zum anschließenden Aktivieren des Schlüssels umfassen und dass die Schritte zum Verhindern der Nutzung des Schlüssels einen Schritt zum Deaktivieren des Schlüssels ohne Löschen der Identifikationsparameter des Schlüssels, die vorab in der Akkreditierungseinrichtung registriert wurden, umfassen.

11. Verfahren nach Anspruch 9, **dadurch gekennzeichnet, dass** die Schritte zum Autorisieren der Nutzung des Schlüssels einen Schritt zum Registrieren der Identifikationsparameter des Schlüssels in der Akkreditierungsvorrichtung (4) umfassen und dass die Schritte zum Verhindern der Nutzung des Schlüssels einen Schritt zum Löschen der Identifikationsparameter, die zuvor in der Akkreditierungseinrichtung registriert wurden, umfassen.

12. Verfahren zur Autorisierung der Nutzung eines gemeinsam genutzten Fahrzeugs (2), **dadurch gekennzeichnet, dass** dieses die Nutzung eines Sharing-Systems (1) gemäß einem der Ansprüche 5 bis 8 umfasst, wobei dieses System vorgesehen ist zum Annehmen eines Zustands (102) für eine Nutzung durch den Eigentümer und eines Zustands (103) für eine geteilte Nutzung, wobei die Nutzung durch den Eigentümer frei von jeglicher Überwachung durch das Sharing-System (1) ist.

## Claims

1. Device (11) for authorising the use of a vehicle (2), which is provided to be connected on the one hand to means (14) for recognising the presence of an authorised user (3) and on the other hand to an accreditation device (4) specific to said vehicle and provided for accrediting ignition keys, said device being connected to the accreditation device by connecting means, preferably via a CAN software bus (12), preferably accessible via an OBD port (9),
said device comprising memory means for saving identification parameters of a single shared key (6), means for authorising the use of the shared key by said user and means for preventing the use of the shared key without erasing said identification parameters,
the means for authorising the use of the key comprise means for activating/deactivating the key, the identification parameters of the key being previously saved in said accreditation device (4).

2. Device according to claim 1, **characterised in that** the device comprises means (18) for determining the position of the vehicle and means (16) for transmitting said position to a remote server (17).

3. Device according to any of claims 1 or 2, **characterised in that** it comprises means (21) for receiving availability and/or reservation information, from a remote server (17).

4. Device according to any of claims 1 to 3, **characterised in that** it comprises means for sending an order to open the door to the vehicle.

5. System for sharing at least one vehicle (2), **characterised in that** each vehicle comprises a sharing device (11) according to any of claims 1 to 4, means (14) for recognising the presence of an authorised user (3) and means for connecting to the accreditation device (4).

6. Sharing system according to claim 5, **characterised in that** the means for detecting the presence of a user comprise RFID antenna means (14).

7. Sharing system according to any of claims 5 and 6, **characterised in that** it comprises at least one remote server (17) for exchanging sharing information, in particular on the position and/or availability and/or reservation, with a remote station (16) and/or with the sharing device (11).

8. Sharing system according to any of claims 5 to 7, **characterised in that** it also comprises at least one recognition device (13) specific to each user.

9. Method for authorising the use of a share vehicle, **characterised in that** it comprises providing a device (11) according to any of claims 1 to 5, and the connection of said device (11) to means specific to the vehicle for accrediting the ignition keys, preferably via a CAN software bus (12), preferably accessible via an OBD port (9), and steps for authorising the use of the shared key (6) by an authorised user (3) and prohibiting the use of said key by another user.

10. Method according to claim 9, **characterised in that** the steps for authorising the use of the key comprise a step of previously recording the identification parameters of the key in the accreditation means (4), and a step of then activating said key, and **in that** the steps for prohibiting the use of said key comprise a step of deactivating the key without erasing the identification parameters of the key previously stored in the accreditation means.

11. Method according to claim 9, **characterised in that** the steps for authorising the use of the key comprise a step of recording the identification parameters of the key in the accreditation means (4), and **in that** the steps for prohibiting the use of said key comprise a step of erasing the identification parameters of the key previously recorded in the accreditation means.

12. Method for authorising the use of a shared vehicle (2), **characterised in that** it comprises the use of a sharing system (1) according to any of claims 5 to 8, said system being provided to assume a state (102) for specific owner use and a state (103) for shared use, in which the specific owner use is free of any monitoring by said sharing system (1).
